# EUROPEAN PATENT APPLICATION

(11) **EP 0 566 753 A1**
(43) Date of publication of application: **27.10.1993**
(21) Application number: 92106725.2
(22) Date of filing: 18.04.1992
(51) Int. Cl.: B29C 45/16, A43B 21/42, A43B 21/20, A43B 21/08

(54) **Method for the realization of a heelpiece and the product obtained with it, particularly footwear**

(71) Applicant: F.LLI FAVERO & C. s.n.c., I-30031 Arino di Dolo (VE) (IT)
(72) Inventor: Favero, Dino, I-30031 Arino Di Dolo (VE) (IT); Favero, Ottorino, I-30031 Arino Di Dolo (VE) (IT)
(74) Representative: D'Agostini, Giovanni, Dr.

(57) **Abstract**

Method for the realization of a heelpiece and the products obtained with it, particularly footwear, by means of a double plastic material injection in the relative moulds, effecting one after the other, obtaining a heel piece (B) in at least two different plastic different material compositions, (1, 2) of which the part (1) that will have contact with the ground is softer than the other part (2) which provides a means (3) for the anchorage to the heel.

## Description

The object of this invention is a method for the realization of a heel piece and the product obtained with it, particularly footwear.

The innovation finds a particular even if not exclusive application in the sector of footwear.

In the prior art are known footwear and particularly heels and relative methods of realization. In these cases said methods, provide the obtainment of a heel, to associate below a sole, which is conveniently coated, in a way that the underside has on its border a small turn-up. The heel piece is inserted in the part under the heel by pressure according to prior art and consists substantially in one plastic element interposed exactly between the ground and the heel, of which main function is to avoid the wear of the last . Said heel piece is obtained in only one single colored material and of a certain hardness necessary for the injecting or moulding, in which upwardly have been made some little pegs for the anchorage to the heel, being inserted in the obtained corresponding holes in the part underlying the same. Exist lastly also other kinds of little pegs, as for example those of the metallic type, which must be pre-inserted in the moulds and in one successive phase the relative plastic material is injected. Other solutions are not known, with exclusion of the most traditional not cited, except those adapted recently, where in practice the heel piece is composed of two materials associated between themselves consequently, one before the other, practically vertically , in order to have only the first part and/or back of the heel piece in a softer material.

In disclosed above solutions however exist different noticeable drawbacks, among these is firstly citeable the fact that they don't cushion sufficiently noise of walking and in certain cases even amplify the sound. A second disadvantage, not less relevant of the first, is that which determines the slippage of the heel with imaginable consequences. The third but not last drawback consists in that it, being made with a particular hardness, transmits the bumps, the vibrations and any prominence of the land, in practice making walking particularly uncomfortable. It rests finally not to forget a certain bad appearance which prevails limiting the possible applications.

Scope of the present invention is to obviate to the above-mentioned drawbacks. This and other scopes are reached with the present innovation according to the characteristics of the appended claims solving exposed problems by means of a method for the realization of a heel piece and the products which are obtained with it, particularly footwear, by means of a double injection of a plastic material in the relative moulds, one before the other, obtaining a heel piece in at least two different plastic horizontal material compositions, of which the part that has contact with the ground is softer than the other part which provides a means for the anchorage to the heel.

In such a way, by the important creative contribution which effect realizes an immediate technical progress, are achieved different advantages among which we remember particularly the effect anti-slipping, warranting the maximum adherence of the heel of the shoe to the ground In the second place it allows to deaden, particularly, the noise provoked by walking, and this particular effect may be also advised as a therapy. Finally besides being particularly resistant to wear, It is aesthetically agreeable being perfectly adaptable to all footwear.

These and other advantages will appear in the specified successive preferential solutions and description of realization with the help of the enclosed schematic drawings of which execution details are not to be considered limitative but only exemplificative.

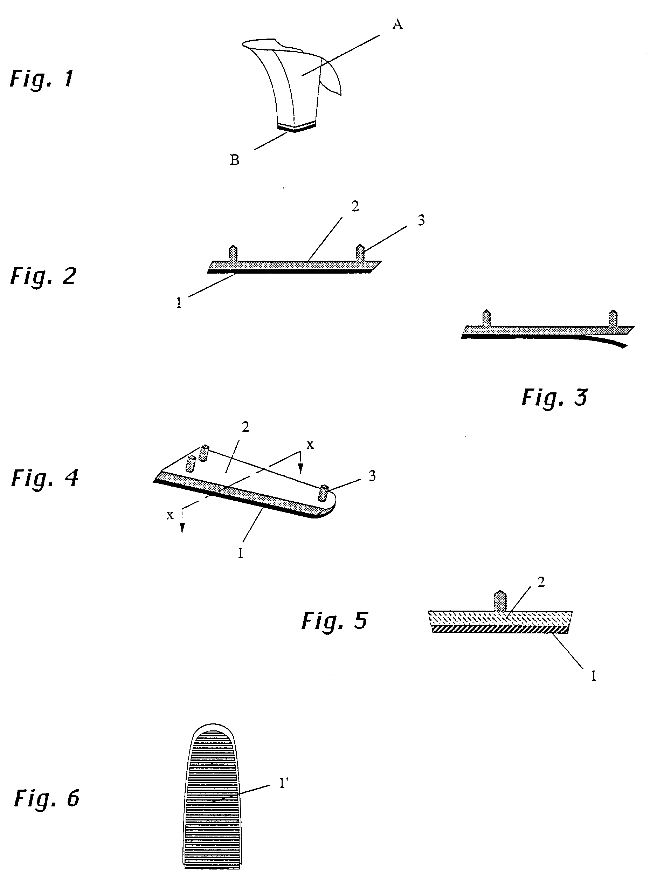

Figure 1 represents a perspective view of a type of heel, in this case for female footwear, to which is applied a heel piece.
Figure 2 represents a side-view of a heel piece obtained in a double component.
Figure 3 represents a view of the heel piece of the previous figure of which has been partially raised the lower stratum.
Figure 4 represents a perspective view seen from the above the heel piece
Figure 5 represents a sectional view of the heel piece seen along the axis X-X of the previous figure.
Figure 6 represents a view seen from under the heel piece of the previous Figures.

Making reference also to the Figures it is disclosed that in the case of the female shoe, is provided a heel (A) on which underneath in correspondence of the ground is associated a heel piece (B). The heel piece (B) is composed of a structure in plastic material made from at least two superposed layers being obtained horizontally (1, 2). of which the first stratum (1), which is contacted with the ground, is made with a type of softer plastic material than that placed above it (2). Its surface is destined to be in contact with the ground (1) and it is shaped with a cross knurling plurality, which increase the grip. The second plastic material stratum (2) , associated to the first (1), is of a more rigid type, and provides upwardly a series of cylindric little pegs or metallic pricks (3) which are needed for the anchorage on the underside of the heel (A). The heel piece (B) is obtained by means of a double injection proceeding, and in particular a first injection is made in the mould relative to the softer part underlying (1), and successively we carry out the second injection under the first, utilizing logically the mould relative to the upper part (2). In such a way, this last mentioned material, fuses with the first forming an unique body, and like this integrating both the means for the anchorage (3) and one stratum, (1) softer and anti-slipping that does not cause noise. Furthermore we observe that the injection of both plastic material layers may be carried out in one color or in two colours depending of the exigencies. Naturally the proceeding may be also reversed, by first injecting the upper stratum (2) and successively the lower one (1).

## Claims

1. Method for the realization of a heel piece and the product obtained with it, particularly, footwear, characterized in that it provides a double injection of the plastic material in the relative moulds, effecting one after the other, obtaining a heel piece in at least two different plastic material compositions deposed in a horizontal sense, of which, the part that corresponds to the contact with the ground is softer than the other part which provides a means for the anchorage to the heel.

2. Heel piece according to claim 1., characterized in that the surface destined to have contact with the ground (1') is shaped with a cross knurling plurality, in which the second plastic material stratum (2), associated to the first (1), of a more rigid type, provides upwardly a series of cylindric pegs or metallic pricks (3) for the anchorage to the heel ( A).
